# FASCICULE DE BREVET EUROPEEN

(11) **EP 1 097 823 B1**
(45) Date de publication et mention de la délivrance du brevet: **19.01.2005**
(21) Numéro de dépôt: 00122630.7
(22) Date de dépôt: 17.10.2000
(51) Int. Cl.: B60B 21/02, B60B 21/10

(54) **Jante destinée à recevoir un anneau de soutien**
Felge zur Aufnahme eines Stützringes
Rim for receiving a supporting ring

(30) Priorité: 04.11.1999 FR 9913964
(43) Date de publication de la demande: 09.05.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Pompier, Jean-Pierre, 63530 Volvic (FR); Drieux, Jean-Jacques, 63530 Volvic (FR); Lacour, Jean-Charles, 63000 Clermont-Ferrand (FR)
(74) Mandataire: Diernaz, Christian

(56) Documents cités:
- FR-A- 2 699 121
- FR-A- 2 713 557
- FR-A- 2 713 558
- FR-A- 2 741 567

## Description

La présente invention a pour objet la réalisation d'une jante de montage pour un pneumatique pouvant former avec un anneau de soutien de bande de roulement et ledit pneumatique un ensemble roulant utile dans le cas de roulage où la pression de gonflage s'abaisse anormalement par rapport à la pression nominale d'emploi, dite pression de service, la pression de gonflage pouvant même s'annuler. Une jante ayant les caractéristiques du préambule de la revendication 1 est décrit dans le document FR-A- 2713 557.

Cette invention concerne plus particulièrement la liaison d'un anneau de soutien avec une jante sur laquelle ledit anneau a été enfilé.

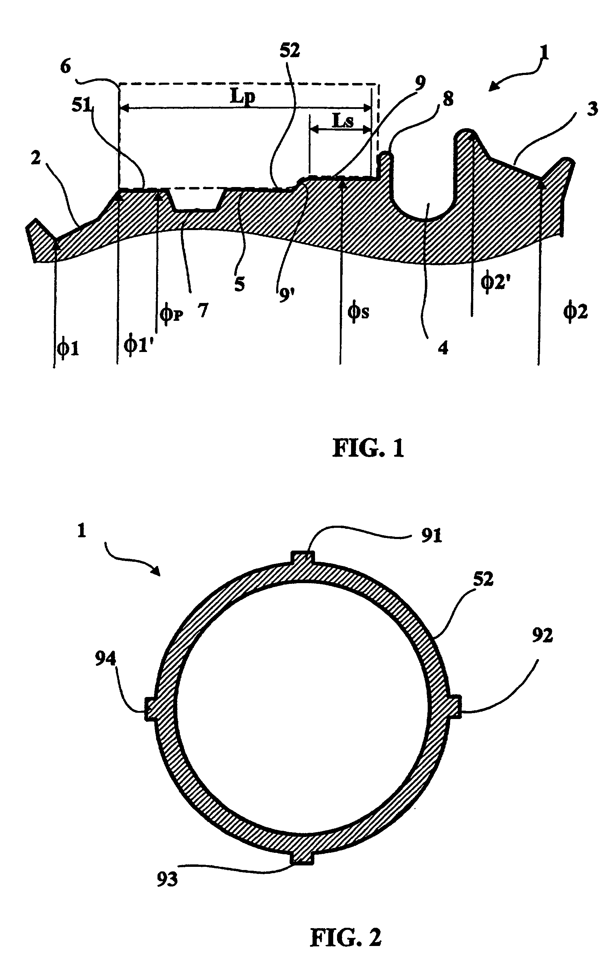

Dans le cas d'une jante de montage comportant deux bords de jante, deux sièges de diamètres respectifs **Φ1** et **Φ2** et, située entre les deux sièges, une portée d'appui ayant une forme essentiellement cylindrique de développement minimal **Dp** au moins égal au développement de toute partie de jante comprise axialement entre ladite extrémité et le bord de jante correspondant au siège de jante le plus proche axialement de ladite extrémité (voir l'exemple représenté à la figure **1**), il est possible de réaliser le montage d'un anneau de soutien en enfilant ce dernier autour d'un siège de jante pour l'amener par coulissement sur la portée d'appui jusqu'à la position désirée.

Pour ce type d'ensemble jante et anneau, le besoin s'est fait sentir de disposer d'un anneau qui reste solidaire de la jante sans occasionner de déséquilibre de type balourd lorsque cet ensemble est mis en rotation, tout en permettant un montage aisé de l'anneau sur sa portée.

En outre et compte tenu des irrégularités de réalisation des jantes, en particulier de jante tôle, il est nécessaire de pouvoir obtenir un montage de l'anneau de soutien qui soit assez insensible à ces irrégularités afin d'avoir un ensemble anneau et jante le plus équilibré possible.

À cet effet et conformément à la présente invention, il est proposé une jante, destinée au montage d'un pneumatique comprenant au moins deux bourrelets, délimitée axialement par un premier bord et un deuxième bord de jante, comprenant, vue en section méridienne, au moins un premier siège de jante et un deuxième siège de jante, au moins le premier siège de jante ayant une génératrice dont extrémité axialement intérieure est sur un cercle de diamètre supérieur au diamètre du cercle sur lequel se trouve l'extrémité axialement extérieure, et au moins une portée d'appui destinée à recevoir un appui de soutien annulaire, ladite portée étant disposée entre les extrémités axialement intérieures des deux sièges; cette portée est de largeur axiale totale**Lp** et a une forme essentiellement cylindrique de développement minimal **Dp** au moins égal au développement de toute partie de jante comprise axialement entre ladite extrémité et le bord de jante correspondant au siège de jante le plus proche axialement de ladite extrémité.

La jante selon l'invention est caractérisée en ce que la portée d'appui comprend au moins une partie surfacique de serrage, chaque partie surfacique de serrage étant régulièrement répartie dans la direction circonférentielle sur ladite portée et présentant un développement externe maximal **Ds**, mesuré sur une surface enveloppante concentrique à la portée, strictement supérieur à **Dp**, afin de créer au montage de l'anneau de soutien un serrage mécanique, entre ledit anneau et ladite partie surfacique de serrage, approprié pour assurer le maintien dudit anneau sur la portée et entre autres limiter voire empêcher tout déplacement relatif dans la direction circonférentielle entre l'anneau et la jante.

Une partie surfacique de serrage est définie comme une épaisseur supplémentaire continue ou discontinue sur la portée d'appui destinée à créer des efforts de serrage entre l'anneau de soutien et ladite portée, cette épaisseur supplémentaire étant disposée sensiblement selon une ligne circulaire perpendiculaire à l'axe de rotation de la jante.

Par régulièrement répartie dans la direction circonférentielle sur la portée d'appui de la jante, on entend une partie surfacique de serrage formant une saillie en relief sur ladite portée et qui est :
- soit continue dans la direction circonférentielle autour de la portée;
- soit composée de plusieurs éléments de relief, les distances circonférentielles entre chacun desdits éléments étant sensiblement égales; ces éléments de relief sont disposés selon une ligne circulaire concentrique à la portée d'appui.

Par surface enveloppante, on entend la surface cylindrique de plus petit développement qui enveloppe une partie surfacique de serrage. Lorsque cette surface enveloppante a pour axe de symétrie l'axe de rotation de la jante, cela signifie que la partie surfacique de serrage enveloppée présente un même décalage radial par rapport à la portée d'appui de développement **Dp**.

Lorsqu'il est fait usage d'un anneau de soutien dont le développement minimal de sa surface intérieure est sensiblement égal au développement **Dp** de la portée, on peut définir sur chaque partie surfacique de serrage un taux de serrage, noté **Ts**, égal au rapport **(Ds-Dp)/Dp**. De manière judicieuse, la valeur du développement **Ds** de chaque partie surfacique de serrage est choisie de façon que ce taux de serrage **Ts** permette une mise en place de l'anneau de soutien sur la jante tout en conservant un serrage suffisant pour empêcher un glissement relatif de l'anneau par rapport à la jante lorsque l'ensemble jante et anneau de soutien est entraîné en rotation.

Pour un taux de serrage donné entre un anneau de soutien et une partie surfacique de serrage, il est préférable que la largeur axiale **Ls** de ladite partie soit comprise entre **10**% et **50**% de la largeur axiale **Lp** de la portée afin de limiter l'effort à fournir pour mettre en place l'anneau sur cette partie surfacique de serrage. Lorsque la largeur axiale **Ls** d'une partie surfacique de serrage est inférieure à **10**% de la largeur axiale **Lp** de la portée, les efforts de serrage ne sont pas suffisants pour assurer un bon maintien de l'anneau de soutien sur la jante; quand la largeur axiale **Ls** d'une partie surfacique de serrage est supérieure à 70% de la largeur axiale **Lp** de la portée, les efforts à fournir pour réaliser le montage de l'anneau deviennent excessifs et peuvent soit empêcher le montage soit induire dans l'anneau de soutien des contraintes trop élevées préjudiciables à une bonne tenue en fatigue dans le temps.

On peut prévoir de réaliser sur la portée d'appui d'une jante plusieurs parties surfaciques de serrage réparties dans la direction axiale sur la portée d'appui, chaque partie surfacique de serrage ayant un développement et une largeur propres pouvant être identiques ou bien différents. De manière préférentielle et pour un taux de serrage choisi pour chaque partie surfacique de serrage, la somme des largeurs desdites parties surfaciques de serrage sera comprise entre **15**% et **70**% de la largeur **Lp** de la portée. Ces valeurs sont destinées à assurer un montage aisé et un serrage satisfaisant d'un anneau de soutien sur la jante.

Dans le but de faciliter la mise en place de l'anneau de soutien sur la jante, chaque partie surfacique de serrage peut se raccorder avec la portée d'appui, du côté du siège de jante par lequel on enfile l'anneau de soutien, au moyen d'une surface engendrée par une génératrice se raccordant en un premier point sur la partie surfacique de serrage et en un second point de la portée, la droite passant par lesdits deux points faisant un angle différent de **90**° avec l'axe de rotation de la jante. Cette même caractéristique peut être prévue des deux côtés de chaque partie surfacique de serrage afin de faciliter également le démontage de l'anneau de soutien.

Une autre variante de réalisation consiste à former sur une jante et sur sa partie axialement la plus éloignée du siège de jante sur lequel on enfile l'appui, une partie surfacique de serrage de forme tronconique d'axe confondu avec l'axe de rotation et dont la génératrice fait, avec la direction axiale, un angle moyen compris entre **1**° et **5**°, le développement minimal de ladite partie surfacique se trouvant du côté du siège de jante sur lequel on enfile l'appui.

La présente invention sera mieux comprise à l'aide du dessin annexé à la description illustrant des exemples non limitatifs d'exécution d'une jante destinée au montage d'un pneumatique, dessin sur lequel :
- la figure **1** montre en coupe une jante monobloc selon l'invention pourvue d'une partie surfacique de serrage formée de quatre éléments en relief sur la portée d'appui régulièrement répartis dans la direction circonférentielle;
- la figure **2** montre une coupe partielle de la jante représentée à la figure **1**, cette coupe étant prise dans un plan perpendiculaire à l'axe de rotation de la jante traversant par la partie surfacique de serrage;
- la figure **3** montre une coupe transversale d'une jante monobloc comportant une rainure de blocage latéral d'un anneau de soutien et pourvue d'une partie surfacique de serrage continue circonférentiellement;
- la figure **4** montre une variante d'exécution selon laquelle la portée d'appui d'une jante comporte deux parties surfaciques de serrage de développements et de largeurs axiales différents;
- la figure **5** montre la surface extérieure de la portée d'appui d'une jante selon l'invention comportant une partie surfacique de serrage continue circonférentiellement et ayant une géométrie moyenne ondulée.

La jante **1** montrée sur la figure **1**, est formée principalement de deux sièges de jante **2** et **3**, une gorge de montage **4** et une portée **5** destinée à recevoir un anneau de soutien **6** (montré en traits pointillés). Les deux sièges de jantes **2** et **3** ont des extrémités axialement extérieures situées sur des cercles dont les diamètres **Φ1** et **Φ2** sont inférieurs respectivement aux diamètres **Φ'1** et **Φ'2** des cercles sur lesquels se trouvent les extrémités axialement intérieures desdits sièges. En outre, les diamètres **Φ1** et **Φ1'** du premier siège de jante **2** sont respectivement inférieurs aux diamètres **Φ2** et **Φ2'** du deuxième siège de jante **3**.

La portée d'appui **5** de largeur **Lp** prolonge axialement l'extrémité radialement la plus à l'extérieur du premier siège de jante **2** et est formée de deux zones cylindriques **51** et **52** de même développement **Dp** (correspondant à un diamètre **Φp**), lesdites zones étant séparées axialement par une gorge **7** destinée à alléger la jante et à la mise en place d'un dispositif avertisseur d'une perte de pression en cours de roulage.

L'extrémité de la portée d'appui **5** axialement la plus éloignée du premier siège de jante **2** est pourvue d'une nervure **8** continue circonférentiellement et destinée à servir de butée au déplacement latéral de l'anneau de soutien.

Au voisinage de cette butée **8**, la portée d'appui **5** comporte une partie suffacique de serrage **9** formée de quatre éléments de relief sur ladite portée **5**. Ces éléments de relief **91**, **92**, **93** et **94**, visibles sur la figure **2** montrant la même jante vue dans un plan de coupe transversal perpendiculaire à l'axe de rotation, sont disposés à une même distance circonfémtielle les uns des autres. Chaque élément de relief présente une surface radialement à l'extérieur qui est cylindrique et dont la largeur **Ls** mesurée dans la direction axiale est inférieure à la largeur **Lp** de la portée d'appui.

La partie surfacique de serrage **9** formée par les quatre éléments de relief peut être enveloppée par une surface enveloppante virtuelle qui, dans le cas présent, est cylindrique et concentrique à la portée d'appui et a un développement **Ds** (correspondant au diamètre **ΦS** porté sur la figure **1**) supérieur au développement **Dp** de la portée **5**.

Pour faciliter la mise en place d'un anneau sur la portée d'appui **5** et sur les éléments de relief formant la partie surfacique de serrage **9**, la surface radialement à l'extérieur de chaque élément de relief est prolongée vers la portée d'appui, du côté du premier siège de jante **2** sur lequel on enfile l'anneau de soutien, par une surface **9'** engendrée par une génératrice ayant la forme d'un arc de cercle se raccordant, d'un côté, tangentiellement à la surface radialement à l'extérieur de chaque élément de relief et, de l'autre côté, perpendiculairement à la portée d'appui.

Dans l'exemple présenté, on note que la présence de plusieurs éléments de relief répartis régulièrement dans la direction circonférentielle provoquera une mise en forme sensiblement polygonale d'un anneau de soutien par déformation de flexion dudit anneau. Il a par ailleurs été constaté de façon surprenante que cette mise en polygone était favorable pour le maintien voire l'établissement du serrage d'un anneau de soutien comportant une armature de renforcement quasiment inextensible dans la direction circonférentielle sur sa jante. Lorsque l'ensemble anneau de soutien et jante est mis en rotation, tout se passe comme si, cette armature de renforcement de l'anneau avait tendance à vouloir adopter une géométrie circulaire de développement inférieur au développement **Ds** de la surface enveloppant la partie surfacique de serrage constituée de plusieurs éléments de relief, ce qui, compte tenu des caractéristiques d'inextensibilité de ladite armature, se traduit par une augmentation des efforts de serrage de l'anneau de soutien sur les éléments de relief, au moins jusqu'à un seuil de vitesse au delà duquel l'armature se déforme suffisamment pour atteindre un développement supérieur à **Ds**. Le même effet est d'ailleurs obtenu qu'il y ait ou non un serrage dès le montage de l'anneau de soutien sur la jante pourvu d'éléments de relief et que les éléments de relief soient ou non répartis régulièrement dans la direction circonférentielle. L'effet constaté existe dès lors que le développement interne de l'anneau de soutien est inférieur au développement de la surface cylindrique enveloppant l'une des parties surfaciques de serrage composée de plusieurs éléments de relief; dans ce cas, il n'est pas nécessaire qu'une pression de serrage soit établie entre un anneau de soutien et lesdits éléments au moment du montage pour que le serrage de l'anneau sur la jante apparaisse dès la mise en rotation de l'ensemble jante / anneau.

Il est utile de prévenir l'usager d'une pression de gonflage insuffisante à l'intérieur d'un pneumatique monté sur une jante pourvue d'un anneau de soutien. La présence de parties surfaciques de serrage formées d'éléments de relief discontinus circonférentiellement peut permettre de satisfaire ce besoin. Dans ce but, une jante est pourvue d'une première partie surfacique de serrage et d'une deuxième partie surfacique de serrage séparées l'une de l'autre dans le sens axial, ces parties surfaciques de serrage étant composées d'un nombre égal d'éléments de relief régulièrement répartis dans la direction circonférentielle, les éléments de relief de ladite première partie étant décalés par rapport aux éléments de relief de ladite deuxième partie dans la direction circonférentielle. Ainsi lorsque la pression a diminué jusqu'à atteindre un seuil prédéterminé, la jante roule en appui sur l'anneau de soutien principalement par l'intermédiaire de ses éléments de relief, ce qui donne naissance, outre un bruit de roulage dû au passage d'un élément au suivant, à une sorte de balancement de la jante autour d'un axe correspondant sensiblement à la direction de déplacement de l'ensemble pneumatique jante, ladite jante s'appuyant alternativement sur la première partie surfacique de serrage puis sur la deuxième en passant d'un élément de relief à un autre. Ce mouvement assimilable à un mouvement de carrossage peut être soit ressenti directement par le conducteur du véhicule équipé d'un tel ensemble pneumatique, soit détecté par un dispositif approprié.

Précisons que dans l'exemple décrit, une valve de gonflage peut être prévue pour déboucher dans la gorge **7** : la discontinuité circonférentielle de la partie surfacique de serrage permettant de façon aisée le gonflage d'un pneumatique monté sur la jante équipée d'un anneau de soutien.

Dans un exemple de réalisation d'une jante **205-440** destinée à être équipée de pneumatique de dimension **205-650-440 PAX** pour un véhicule de tourisme, les dimensions caractéristiques étaient les suivantes :
- **Lp = 135 mm; Ls = 30 mm (Ls/Lp = 22%)**
- **Φp = 446 mm; Φs = 447 mm; Φ1 = 440 mm.**

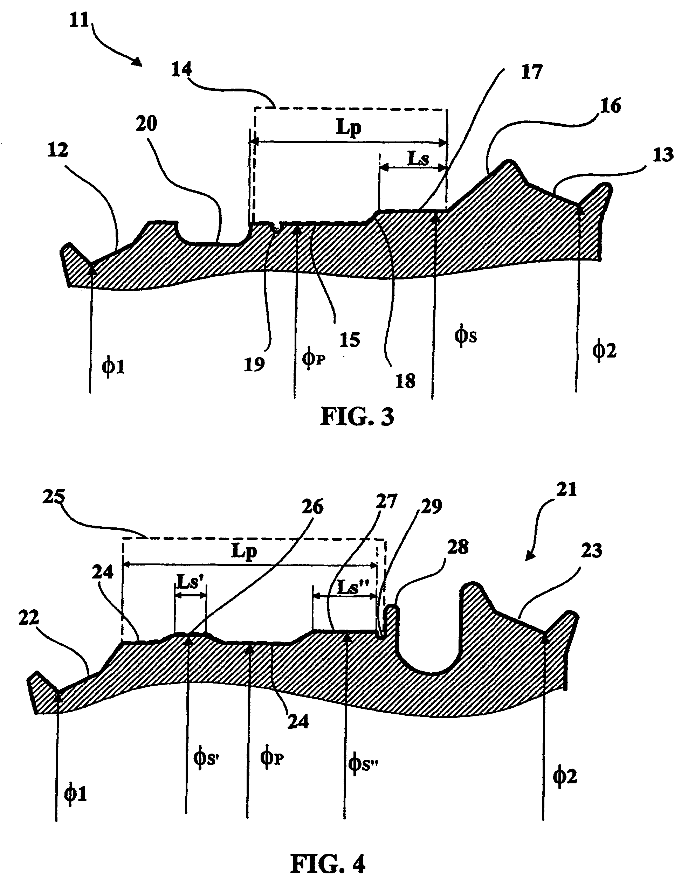

La figure **3** montre une jante **11** assez semblable à la jante **1** représentée à la figure **1** à la différence près qu'elle ne comporte plus de gorge de montage (notée **4** sur la figure **1**) mais seulement une gorge **20** d'allégement de ladite jante et prévue par exemple pour la mise en place d'un dispositif avertisseur de sous gonflage. Le siège de jante **13** de diamètre Φ**2** supérieur au diamètre Φ**1** du siège de jante **12** est prolongé axialement vers la portée d'appui **15** par une surface tronconique **16**. La portée d'appui **15** de forme générale cylindrique de diamètre moyen Φ**p** est pourvue d'une partie surfacique de serrage cylindrique **17** de diamètre Φs et de largeur axiale Ls se raccordant sur un côté avec la surface tronconique **16**. Pour faciliter le montage d'un anneau de soutien **14** (en traits pointillés) sur la portée **15**, la surface radialement externe de la partie surfacique de serrage **17** est prolongée par une surface tronconique **18** se raccordant avec ladite portée du côté du siège de jante **12** de plus petit diamètre. Dans cet exemple, la portée **15** comporte une rainure **19** destinée à recevoir une nervure en relief sur la surface interne de l'anneau de soutien **14** afin d'empêcher tout déplacement axial dudit anneau pendant le roulage.

La figure **4** montre une variante d'une jante **21** selon l'invention proche dans sa forme générale de la jante **1** montrée à la figure **1**. La jante **21** comporte axialement entre ses deux sièges de jante **22**, **23** une portée d'appui **24** prolongeant axialement le siège de jante **22** de plus petit diamètre destiné à être introduit le premier dans un anneau de soutien pour effectuer le montage dudit anneau **25** (en traits pointillés) sur ladite jante. Cette portée d'appui **24** est pourvue d'une première et d'une seconde parties surfaciques de serrage **26**, **27** continues circonférentiellement et séparées axialement l'une de l'autre. La seconde partie surfacique de serrage **27** est située au voisinage d'une butée **28** limitant le déplacement axial de l'anneau **25** en position sur la jante **21**, tandis que la première partie surfacique de serrage **26** est sensiblement localisée à mi distance entre la seconde partie surfacique de serrage **27** et le premier siège de jante **22**. Dans l'exemple présenté, les parties surfaciques de serrage **26**, **27** présentent des formes externes cylindriques de diamètres **Φs'** et **Φs"** d'axes confondus avec l'axe de rotation de la jante et de largeurs **Ls'** et **Ls"** différents.

Les diamètres **Φs", Φs', Φp** satisfont la relation suivante : **Φs"** > **Φs'** > **Φp** (**Φs"** est supérieur à **Φs'** qui est lui même supérieur à **Φp**) et la largeur **Ls"** de la seconde partie surfacique de serrage **27** est supérieure à la largeur **Ls'** de la première partie surfacique de serrage **26** de façon à réduire l'effort nécessaire à la mise en place de l'anneau de soutien **25** dont le développement interne est, par exemple, sensiblement égal au développement de la portée d'appui **24**.

À noter qu'une rainure **29** de petite largeur est prévue entre la seconde partie surfacique de serrage **27** et la butée **28** dans le but d'éviter d'avoir une zone de raccordement entre ladite partie surfacique de serrage et la butée qui réduise la hauteur de la paroi latérale de la butée perpendiculaire à l'axe de rotation; cette disposition permet une retenue axiale satisfaisante de l'anneau de soutien une fois celui-ci en place contre ladite paroi latérale de la butée.

Bien entendu, dans l'exemple qui vient d'être décrit il est possible de remplacer au moins une des parties surfaciques de serrage continues circonférentiellement par une partie surfacique de serrage discontinue.

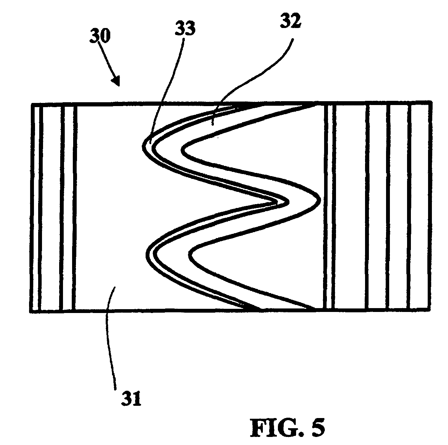

Le dernier exemple montré avec la figure **5** (représentant une vue "à plat" de la surface radialement extérieure d'une jante **30**) illustre un cas particulier selon lequel cette jante comporte une portée d'appui **31** pourvue d'une partie surfacique de serrage **32** continue circonférentiellement et dont le profil moyen sur ladite portée a une forme géométrique ondulée. Pour faciliter la mise en place d'un anneau sur ladite partie surfacique de serrage il est prévu une surface de raccordement **33** faisant un angle différent de **90**° avec la direction axiale.

Un autre mode de réalisation, non représenté, consiste à réaliser une pluralité de nervures en relief sur la portée d'appui, la largeur desdites nervures étant sensiblement égale à la distance circonférentielle moyenne séparant deux nervures consécutives. Ces nervures peuvent avoir une direction sensiblement confondue ou bien inclinée avec la direction axiale de la jante.

## Revendications

1. Jante (**1**), destinée au montage d'un pneumatique comprenant au moins deux bourrelets, délimitée axialement par un premier bord et un deuxième bord de jante, comprenant, vue en section méridienne, au moins un premier siège de jante (**2**) et un deuxième siège de jante (**3**), au moins le premier siège de jante (**2**) a une génératrice dont l'extrémité axialement intérieure est sur un cercle de diamètre **Φ1'** supérieur au diamètre **Φ1** du cercle sur lequel se trouve l'extrémité axialement extérieure,
et au moins une portée d'appui (**5**) destinée à recevoir un appui de soutien annulaire par glissement dudit appui sur un côté de la jante, ladite portée (**5**) étant disposée entre les extrémités axialement intérieures des deux sièges et ayant une forme essentiellement cylindrique de développement minimal **Dp** au moins égal au développement de toute partie de jante comprise axialement entre ladite extrémité et le bord de jante correspondant au siège de jante le plus proche axialement de ladite extrémité, ladite jante étant **caractérisée en ce que** :
la portée d'appui (**5**) comprend au moins une partie surfacique de serrage (**9**), chaque partie surfacique de serrage (**9**) étant régulièrement répartie dans la direction circonférentielle sur ladite portée et présentant un développement externe maximal **Ds** supérieur à **Dp**, ledit développement **Ds** étant mesuré sur une surface enveloppante concentrique à la portée (**5**), afin de créer au montage de l'anneau de soutien un serrage mécanique, entre ledit anneau et ladite partie surfacique de serrage, approprié pour assurer le maintien dudit anneau sur la portée.

2. Jante selon la revendication **1 caractérisée en ce que** chaque partie surfacique de serrage (**9**) a une largeur axiale **Ls** comprise entre **10**% et **50**% de la largeur axiale **Lp** de la portée d'appui.

3. Jante selon la revendication **2 caractérisée en ce que** chaque partie surfacique de serrage (**9**) se raccorde, avec la portée (**5**) du côté du siège de jante par lequel on enfile l'anneau de soutien, au moyen d'une surface (**9'**) engendrée par une génératrice se raccordant en un premier point sur la partie surfacique de serrage (**9**) et en un second point de la portée (**5**), la droite passant par lesdits deux points faisant un angle différent de 90° avec l'axe de rotation de la jante dans le but de faciliter la mise en place de l'anneau de soutien.

4. Jante selon l'une des revendications **1** à **3 caractérisée en ce que** au moins une partie surfacique de serrage (**9**) est continue circonférentiellement et est inscrite à l'intérieur d'une surface enveloppante cylindrique de développement **Ds**, ladite surface enveloppante étant concentrique de la portée d'appui (**5**).

5. Jante selon l'une des revendications **1** à **4 caractérisée en ce que** la portée d'appui **(24)** comprend deux parties surfaciques de serrage **(26, 28)** distinctes l'une de l'autre axialement, lesdites parties étant de largeur axiale **Ls'** et **Ls"** différentes, la partie de largeur axiale la plus petite étant située entre l'autre partie et le côté de la jante sur lequel on enfile l'appui.

6. Jante selon l'une des revendications **1** à **5 caractérisée en ce qu'**au moins une partie surfacique de serrage (**9**) est composée d'éléments de relief (**91, 92, 93, 94**) régulièrement répartis dans la direction circonférentielle sur la portée (**5**), chaque élément de relief ayant une largeur axiale **Ls** au moins égale à **10**% de **Lp**, le développement **Ds** de la surface cylindrique enveloppant l'ensemble desdits éléments de relief d'une même partie surfacique de serrage étant strictement supérieur à **Dp.**

7. Jante selon la revendication **6 caractérisée en ce qu'**elle est pourvue d'au moins deux parties surfaciques de serrage séparées les unes des autres dans le sens axial, au moins une première partie surfacique de serrage et une deuxième partie surfacique de serrage étant composées d'un nombre égal d'éléments de relief régulièrement répartis dans la direction circonférentielle, les éléments de relief de ladite première partie étant décalés par rapport aux éléments de relief de ladite deuxième partie dans la direction circonférentielle.

8. Jante selon l'une des revendications **1** à **6 caractérisée en ce qu'**au moins une partie surfacique de serrage **(32)** présente, dans la direction axiale, une trace moyenne en zigzag ou ondulée.

9. Jante selon la revendication **1 caractérisée en ce que** la partie surfacique de serrage est tronconique et fait avec la direction axiale un angle moyen compris entre **1°** et **5°,** le développement minimal de ladite partie surfacique se trouvant du côté du siège de jante sur lequel on enfile l'appui.

10. Jante selon l'une des revendications **1** à **9 caractérisée en ce que** la portée d'appui **(24)** comporte en outre une butée **(27)** destinée à limiter axialement le mouvement de mise en place de l'anneau de soutien et **en ce qu'**une partie surfacique de serrage est disposée à proximité de ladite butée.

11. Jante selon la revendication **10 caractérisée en ce que** la partie surfacique de serrage (**26**) à proximité de la butée (**27**) est séparée de ladite butée par une rainure (**29**).

## Patentansprüche

1. Felge (1), die für die Montage eines Luftreifens vorgesehen ist, der mindestens zwei Wülste aufweist, die axial durch einen ersten Felgenrand und einen zweiten Felgenrand begrenzt ist, die im Längsschnitt betrachtet mindestens einen ersten Felgensitz (2) und einen zweiten Felgensitz (3), wobei mindestens der erste Felgensitz (2) eine Erzeugende aufweist, deren in axialer Richtung innen liegendes Ende auf einem Kreis mit einem Durchmesser Φ1' liegt, der größer als der Durchmesser Φ1 des Kreises ist, auf dem sich das in axialer Richtung außen liegende Ende befindet,
und mindestens eine Auflagefläche (5) umfaßt, die dafür vorgesehen ist, einen Stützring durch Verschieben dieses Stützrings über eine Seite der Felge aufzunehmen, wobei die Auflagefläche (5) zwischen den axial innen liegenden Enden der beiden Sitze angeordnet ist und eine im wesentlichen zylindrische Form aufweist mit einer minimalen Abwicklung Dp, die mindestens so groß wie die Abwicklung jedes Felgenteils ist, das axial zwischen diesem Ende und dem Felgenrand liegt, der dem Felgensitz entspricht, der in axialer Richtung diesem Ende am nächsten liegt, wobei die Felge **dadurch gekennzeichnet ist, dass**
die Auflagefläche (5) mindestens ein flächiges Klemmteil (9) aufweist, wobei jedes flächige Klemmteil regelmäßig in Umfangsrichtung auf der Auflagefläche verteilt ist und eine maximale äußere Abwicklung Ds aufweist, die größer als Dp ist, wobei die Abwicklung Ds auf einer umhüllenden Oberfläche gemessen wird, die konzentrisch mit der Auflagefläche (5) ist, um bei der Montage des Stützrings einen mechanischen Klemmsitz zwischen dem Ring und dem flächigen Klemmteil zu erzeugen, der den Ring auf der Auflagefläche zu halten.

2. Felge nach Anspruch 1, **dadurch gekennzeichnet, dass** jedes flächige Klemmteil (9) eine axiale Breite Ls aufweist, die im Bereich von 10 % bis 50 % der axialen Breite Lp der Auflagefläche liegt.

3. Felge nach Anspruch 2, **dadurch gekennzeichnet, dass** jedes flächige Klemmteil (9) mit der Auflagefläche (5) auf der Seite des Felgensitzes, über die der Stützring aufgezogen wird, über eine Fläche (9') in Verbindung steht, die durch eine Erzeugende erzeugt wird, die in einem ersten Punkt mit dem flächigen Klemmteil (9) und in einem zweiten Punkt mit der Auflagefläche (5) verbunden ist, wobei die Gerade, die durch die beiden Punkte geht, einen Winkel mit der Drehachse der Felge bildet, der verschieden von 90° ist, um die Montage des Stützrings zu erleichtern.

4. Felge nach einem der Ansprüche 1 bis 3, **dadurch gekennzeichnet, dass** mindestens ein flächiges Klemmteil (9) in Umfangsrichtung kontinuierlich ist und in das Innere einer zylindrischen umhüllenden Fläche mit der Abwicklung Ds eingeschrieben ist, wobei die umhüllende Fläche konzentrisch mit der Auflagefläche (5) ist.

5. Felge nach einem der Ansprüche 1 bis 4, **dadurch gekennzeichnet, dass** die Auflagefläche (24) zwei flächige Klemmteile (26, 28) umfaßt, die axial voneinander getrennt sind, wobei diese Teile eine verschiedene axiale Breite Ls' und Ls" aufweisen, wobei das Teil mit der geringeren axialen Breite zwischen dem anderen Teil und der Seite der Felge angeordnet ist, über die der Stützring aufgezogen wird.

6. Felge nach einem der Ansprüche 1 bis 5, **dadurch gekennzeichnet, dass** mindestens ein flächiges Klemmteil aus Reliefelementen (91, 92, 93, 94) besteht, die regelmäßig in Umfangsrichtung auf der Auflagefläche (5) verteilt sind, wobei jedes Reliefelement eine axiale Breite Ls aufweist, die mindestens 10 % der Breite Lp entspricht, wobei die Abwicklung Ds der zylindrischen Fläche, die die Gesamtheit dieser Reliefelement ein und desselben flächigen Klemmteils umhüllt, streng größer als Dp ist.

7. Felge nach Anspruch 6, **dadurch gekennzeichnet, dass** sie mit mindestens zwei flächigen Klemmteilen ausgestattet ist, die in axialer Richtung voneinander getrennt sind, wobei mindestens ein erstes flächiges Klemmteil und ein zweites flächiges Klemmteil aus einer gleichen Zahl von Reliefelementen bestehen, die regelmäßig in Umfangsrichtung verteilt sind, wobei die Reliefelemente des ersten Klemmteils in Umfangsrichtung verschoben sind, bezogen auf die Reliefelemente des zweiten Klemmteils.

8. Felge nach einem der Ansprüche 1 bis 6, **dadurch gekennzeichnet, dass** mindestens ein flächiges Klemmteil (32) in axialer Richtung eine zickzackförmige oder wellenförmige mittlere Spur aufweist.

9. Felge nach Anspruch 1, **dadurch gekennzeichnet, dass** das flächige Klemmteil kegelstumpfartig ist und mit der axialen Richtung einen mittleren Winkel bildet, der im Bereich von 1 bis 5 ° liegt, wobei sich die minimale Abwicklung dieses flächigen Klemmteils auf der Seite des Felgensitzes befindet, über die der Stützring aufgezogen wird.

10. Felge nach einem der Ansprüche 1 bis 9, **dadurch gekennzeichnet, dass** die Auflagefläche (24) außerdem einen Anschlag (27) aufweist, der dafür vorgesehen ist, die Bewegung des Stützrings bei seiner Montage in axialer Richtung zu begrenzen, und dass ein flächiges Klemmteil in Nähe des Anschlags angeordnet ist.

11. Felge nach Anspruch 10, **dadurch gekennzeichnet, dass** das flächige Klemmteil (26) in der Nähe des Anschlags (27) durch eine Nut (29) von dem Anschlag getrennt ist.

## Claims

1. A rim (1), intended for mounting a tyre comprising at least two beads, which rim is defined axially by a first rim edge and a second rim edge, comprising, viewed in meridian section, at least one first rim seat (2) and a second rim seat (3), at least the first rim seat (2) having a generatrix, the axially inner end of which is on a circle of diameter Φ1' greater than the diameter Φ1 of the circle on which the axially outer end is located,
and at least one bearing surface (5) intended to receive an annular bearing support by sliding said support over one side of the rim, said bearing surface (5) being arranged between the axially inner ends of the two seats and having an essentially cylindrical shape of minimum development Dp at least equal to the development of any rim part located axially between said end and the rim edge corresponding to the rim seat axially closest to said end, said rim being **characterised in that**:
the bearing surface (5) comprises at least one surface clamping part (9), each surface clamping part (9) being regularly distributed in the circumferential direction over said bearing surface and having a maximum external development Ds greater than Dp, said development Ds being measured on an enveloping surface concentric to the bearing surface (5), in order to create mechanical clamping when the support ring is mounted, between said ring and said surface clamping part, which is appropriate to ensure holding of said ring on the bearing surface.

2. A rim according to Claim 1, **characterised in that** each surface clamping part (9) has an axial width Ls which is between 10% and 50% of the axial width Lp of the bearing surface.

3. A rim according to Claim 2, **characterised in that** each surface clamping part (9) is connected to the bearing surface (5) on the side of the rim seat from which the support ring is slipped on, by means of a surface (9') generated by a generatrix which is connected at a first point to the surface clamping part (9) and at a second point to the bearing surface (5), the straight line passing through said two points forming an angle other than 90° with the axis of rotation of the rim with the aim of facilitating the putting in place of the support ring.

4. A rim according to one of Claims 1 to 3, **characterised in that** at least one surface clamping part (9) is circumferentially continuous and is inscribed on the inside of a cylindrical enveloping surface of development Ds, said enveloping surface being concentric to the bearing surface (5).

5. A rim according to one of Claims 1 to 4, **characterised in that** the bearing surface (24) comprises two surface clamping parts (26, 28) which are axially distinct from one another, said parts being of different axial widths Ls' and Ls", the part of lesser axial width being located between the other part and the side of the rim on to which the support is slipped.

6. A rim according to one of Claims 1 to 5, **characterised in that** at least one surface clamping part (9) is composed of elements in relief (91, 92, 93, 94) which are regularly distributed in the circumferential direction over the bearing surface (5), each element in relief having an axial width Ls which is at least equal to 10% of Lp, the development Ds of the cylindrical surface enveloping all said elements in relief of one and the same surface clamping part being strictly greater than Dp.

7. A rim according to Claim 6, **characterised in that** it is provided with at least two surface clamping parts separated from each other in the axial direction, at least a first surface clamping part and a second surface clamping part being composed of an equal number of elements in relief distributed regularly in the circumferential direction, the elements in relief of said first part being offset relative to the elements in relief of said second part in the circumferential direction.

8. A rim according to one of Claims 1 to 6, **characterised in that** at least one surface clamping part (32) has, in the axial direction, a zigzag or undulating average trace.

9. A rim according to Claim 1, **characterised in that** the surface clamping part is frustoconical and forms with the axial direction an average angle of between 1° and 5°, the minimum development of said surface part being on the side of the rim seat on to which the support is slipped.

10. A rim according to one of Claims 1 to 9, **characterised in that** the bearing surface (24) furthermore comprises a stop (27) intended to limit axially the positioning movement of the support ring and **in that** a surface clamping part is arranged close to said stop.

11. A rim according to Claim 10, **characterised in that** the surface clamping part (26) close to the stop (27) is separated from said stop by a groove (29).
